# EUROPEAN PATENT APPLICATION

(11) **EP 4 528 038 A1**
(43) Date of publication of application: **26.03.2025**
(21) Application number: 24177338.1
(22) Date of filing: 22.05.2024
(51) Int. Cl.: E02F 9/22, H02P 29/032, H02K 7/116, F16F 15/027, E02F 3/42, E02F 9/24, E02F 9/20

(54) **DRIVE DEVICE AND METHOD OF CONTROLLING THE SAME**

(30) Priority: 26.05.2023 JP 2023086819
(71) Applicant: Nabtesco Corporation, Tokyo 102-0093 (JP)
(72) Inventor: Furuta, Noriko, Tokyo, 102-0093 (JP); Takahashi, Masahiro, Tokyo, 102-0093 (JP); Hirotsu, Soichiro, Tokyo, 102-0093 (JP); Hisada, Kazuki, Tokyo, 102-0093 (JP); Komori, Etsuro, Tokyo, 102-0093 (JP)
(74) Representative: Grünecker Patent- und Rechtsanwälte PartG mbB

(57) **Abstract**

The present invention relates to a drive device (1) and a method of controlling the drive device. The drive device (1) according to the invention includes a first member (102, 103, 104, 105, 106), a second member (102, 103, 104, 105, 106), an electric actuator (2), and a damper (9). The damper (9) is configured to drive in an enabled mode and a disabled mode, the enabled mode enables a function of mitigating an impact load applied to either one of the first member and the second member, and the disabled mode disables the function of mitigating an impact load applied to either one of the first member and the second member.

## Description

### TECHNICAL FIELD

The present invention relates to a drive device and a method of controlling the drive device.

### BACKGROUND

Devices using hydraulic pressure such as hydraulic motors and hydraulic cylinders are known as, for example, drive devices for hydraulic excavators and other construction machines. Devices using electric power such as electric motors and linear actuators are also known to be used in place of the devices using hydraulic pressure.

When electric motors or linear actuators are used as drive devices, the impact loads applied to the electric motors or linear actuators used as described above could damage the drive devices. To address this issue, various techniques have been proposed to absorb the impact loads. For example, Patent Literature 1 discloses a technique in which a mechanism composed of a disc spring or a torsion spring is provided in a linear actuator. This mechanism for absorbing the impact loads operates in the event of an overload to prevent damage to the linear actuator.

### RELEVANT REFERENCE

### LIST OF RELEVANT PATENT LITERATURE

Patent Literature 1: Publication of Japanese Patent No. 5497198

### SUMMARY

However, the conventional technique described above has an issue that the above configuration is not applicable to the case where an electric motor is used as a drive device for rotational drive. Furthermore, when the mechanism for absorbing the impact loads is used in an actual construction machine, it would need to be configured to withstand large impact loads, resulting in a larger size of the device. Thus, drive efficiency of the drive device is reduced.

The present invention provides a drive device and a method of controlling the drive device capable of mitigating the impact loads applied to the rotationally driving device and preventing reduction in drive efficiency.

A drive device according to one aspect of the invention includes: a first member; a second member rotatable relative to the first member so as to move closer to and away from the first member; an electric actuator configured to rotate the second member relative to the first member; and a damper connected to the first member and the second member. The damper is configured to drive in an enabled mode and a disabled mode, the enabled mode enables a function of mitigating an impact load applied to either one of the first member and the second member, and the disabled mode disables the function of mitigating an impact load applied to either one of the first member and the second member.

This configuration allows the damper to mitigate the impact load applied to the electric actuator driving rotationally. Damage to the electric actuator can be prevented. The damper is configured to operate in the enabled mode, which enables the function of mitigating the impact load, and the disabled mode, which disables the function of mitigating the impact load. This prevents the damper from acting constantly and thus imparting a load on the electric actuator. Therefore, reduction in the drive efficiency of the drive device can be prevented.

A drive device according to another aspect of the invention includes: a boom rotatably coupled to a swing bracket provided on a vehicle body; an arm rotatably coupled to the boom; an attachment rotatably coupled to the arm; an electric actuator provided in at least one of a coupling portion between the swing bracket and the boom, a coupling portion between the boom and the arm, or a coupling portion between the arm and the attachment; and a damper connected to the vehicle body and the swing bracket and configured to mitigate an impact load applied to the swing bracket.

This configuration allows impact loads applied to the arm, boom, and attachment to be transmitted to the swing bracket and then to the damper via the swing bracket before the impact loads are applied to the electric actuator. Since the damper can mitigate the impact loads, it is possible to mitigate the impact loads applied to the electric actuator driving rotationally and to prevent damage to the electric actuator. Since the damper is connected to the vehicle body and the swing bracket, it can be prevented that a load is imparted to the electric actuator even if the damper acts constantly. Therefore, reduction in the drive efficiency of the drive device can be prevented.

In the above configuration, the damper may include an electric fluid actuator, The electric fluid actuator may include: a cylinder; a fluid pump configured to circulate a fluid to the cylinder; and a fluid actuator-adapted electric motor configured to drive the fluid pump.

In the above configuration, the electric actuator may include: an actuator-adapted electric motor; and a speed reducer integrated with the actuator-adapted electric motor. The speed reducer may include: a case; and a reduction mechanism housed in the case and configured to decelerate rotation input from the actuator-adapted electric motor and output the decelerated rotation. The case may serve as a tank for storing the fluid.

In the above configuration, the electric fluid actuator and the electric actuator may be integrated together.

In the above configuration, the fluid pump and the case may be connected via a tube conveying the fluid, and the tube may be exposed to an outside air.

A drive device according to another aspect of the invention includes: a drive member; and a fluid rotator and an electric rotator configured to drive the drive member. The fluid rotator and the electric rotator are located coaxially, a fluid rotator output unit for outputting rotation of the fluid rotator and an electric rotator output unit for outputting rotation of the electric rotator are opposed to each other, and the fluid rotator output unit and the electric rotator output unit are connected via the drive member.

With such configuration, when an impact load is applied to the drive member, the fluid rotator can mitigate the impact load applied to the electric rotator. This can mitigate the impact load applied to the electric rotator driving rotationally and prevent damage to the electric rotator. Since the fluid rotator can assist the drive of the electric rotator, the drive efficiency of the drive device can be improved.

In the above configuration, it is also possible that the fluid rotator includes a fluid rotator fixing portion located on an opposite side to the fluid rotator output unit in an axial direction, the fluid rotator output unit is rotated relative to the fluid rotator fixing portion, the electric rotator includes an electric rotator fixing portion located on an opposite side to the electric rotator output unit in the axial direction, the electric rotator output unit is rotated relative to the electric rotator fixing portion, and the fluid rotator fixing portion and the electric rotator fixing portion are fixed to a fixing member other than the drive member.

In the above configuration, it is also possible that the fluid rotator includes: a rotor portion having a volume chamber with a liquid supplied to and drained from the volume chamber; and a valve plate having a port for supplying and draining the liquid into and from the volume chamber. It is also possible that the rotor portion generates a rotational force with the liquid supplied to and drained from the volume chamber, and the valve plate rotates integrally with the fluid rotator output unit.

In the above configuration, it is also possible that the rotor portion includes: an internal gear; and an external gear configured to perform planetary motion radially inside the internal gear. It is also possible that the volume chamber is formed between the internal gear and the external gear.

A method of controlling a drive device according to one aspect of the invention controls the drive device. The drive device includes: a first member; a second member rotatable relative to the first member so as to move closer to and away from the first member; an electric actuator configured to rotate the second member relative to the first member; and a damper connected to the first member and the second member, and the damper is configured to drive in an enabled mode and a disabled mode, the enabled mode enables a function of mitigating an impact load applied to either one of the first member and the second member, and the disabled mode disables the function of mitigating an impact load applied to either one of the first member and the second member. The control method includes: putting the damper into the enabled mode when an impact load applied to either one of the first member and the second member exceeds a predetermined threshold; and putting the damper into the disabled mode when an impact load applied to either one of the first member and the second member is less than or equal to the predetermined threshold.

This method allows the damper to mitigate the impact load applied to the electric actuator. By switching the damper between the enabled mode, which enables the function of mitigating the impact load, and the disabled mode, which disables the function of mitigating the impact load, the damper can be prevented from imparting a load to the electric actuator. Therefore, reduction in the drive efficiency of the drive device can be prevented.

A method of controlling a drive device according to one aspect of the invention controls the drive device. The drive device includes: a drive member; a fluid rotator and an electric rotator configured to drive the drive member, and a tank channel configured to return a fluid for driving the fluid rotator to a tank, the fluid rotator and the electric rotator are located coaxially, a fluid rotator output unit for outputting rotation of the fluid rotator and an electric rotator output unit for outputting rotation of the electric rotator are opposed to each other, and the fluid rotator output unit and the electric rotator output unit are connected via the drive member. The control method includes: opening the tank channel to obtain regenerative energy by the electric rotator; and blocking the tank channel to cause the fluid rotator to function as a brake for braking rotation of the electric rotator.

This method allows the hydraulic motor to function as a brake for the electric motor, thus simplifying the drive device. The regenerative energy can be obtained by the electric motor without being inhibited by the hydraulic motor. Therefore, the drive efficiency of the drive device can be increased.

### ADVANTAGEOUS EFFECTS

The drive device and the method of controlling the drive device described above are capable of mitigating the impact loads applied to the rotationally driving device and preventing reduction in drive efficiency.

### BRIEF DESCRIPTION OF THE DRAWINGS

Fig. 1 schematically illustrates configuration of a construction machine according to a first embodiment of the invention.
Fig. 2 schematically illustrates configuration of an electric actuator according to the first embodiment of the invention.
Fig. 3 schematically illustrates configuration of a damper according to the first embodiment of the invention.
Fig. 4 is a flowchart showing a method of controlling the drive device according to the first embodiment of the invention.
Fig. 5 schematically illustrates configuration of a drive device according to a second embodiment of the invention.
Fig. 6 schematically illustrates configuration of an electric hydraulic actuator according to the second embodiment of the invention.
Fig. 7 schematically illustrates configuration of a drive device according to a first variation of the second embodiment of the invention.
Fig. 8 is a hydraulic circuit diagram of a drive device according to a second variation of the second embodiment of the invention.
Fig. 9 schematically illustrates configuration of a drive device according to a third variation of the second embodiment of the invention.
Fig. 10 schematically illustrates configuration of a drive device according to a fourth variation of the second embodiment of the invention.
Fig. 11 schematically illustrates configuration of a drive device according to a third embodiment of the invention.

### DESCRIPTION OF THE PREFERRED EMBODIMENTS

The embodiments of the present invention will be hereinafter described with reference to the drawings.

### First Embodiment

### <Construction Machine>

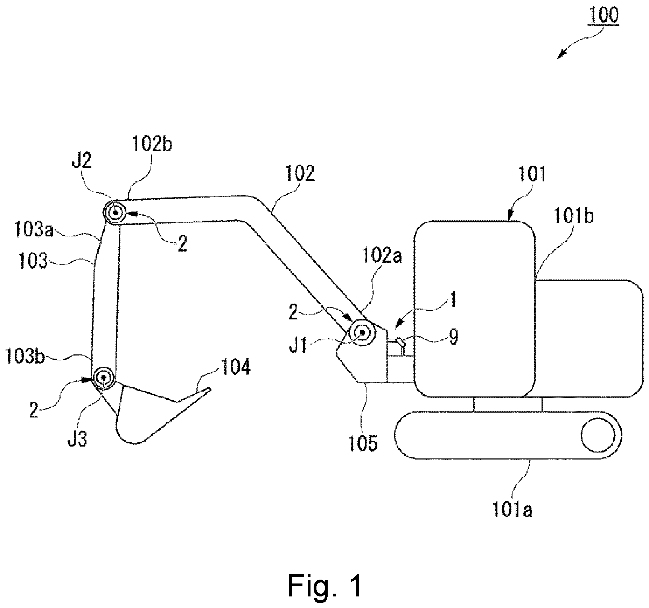

Fig. 1 schematically illustrates configuration of a construction machine 100 including a drive device 1 according to a first embodiment. The construction machine 100 is a type of excavator, such as a power shovel. As shown in Fig. 1, the construction machine 100 includes: a vehicle body 101 having an undercarriage 101a and a slewable upper structure 101b; and a boom 102, an arm 103, a bucket (an example of an attachment recited in the claims) 104, and a plurality of drive devices 1 provided on the vehicle body 101. In the following description, the "top-bottom direction" refers to the top-bottom direction of the construction machine 100 placed on the road surface, and the "front-rear direction" and the "left-right direction" refer to the front-rear direction and the left-right direction with respect to the slewable upper structure 101b.

The slewable upper structure 101b is slewable relative to the undercarriage 101a around a rotational axis extending in the top-bottom direction. The proximal end 102a of the boom 102 is rotatably coupled to the slewable upper structure 101b via a swing bracket 105. The proximal end 103a of the arm 103 is rotatably coupled to the distal end 102b of the boom 102. The bucket 104 is rotatably coupled to the distal end 103b of the arm 103.

The first rotational axis J1 between the swing bracket 105 and the boom 102, the second rotational axis J2 between the boom 102 and the arm 103, and the third rotational axis J3 between the arm 103 and the bucket 104 extend along the left-right direction. The swing bracket 105 is provided on the slewable upper structure 101b so as to be swingable in the left-right direction. An electric actuator 2 is provided in each of the coupling portion between the swing bracket 105 and the boom 102, the coupling portion between the boom 102 and the arm 103, and the coupling portion between the arm 103 and the bucket 104. Each of the electric actuators 2 constitutes a part of the drive device 1.

### <Drive Device>

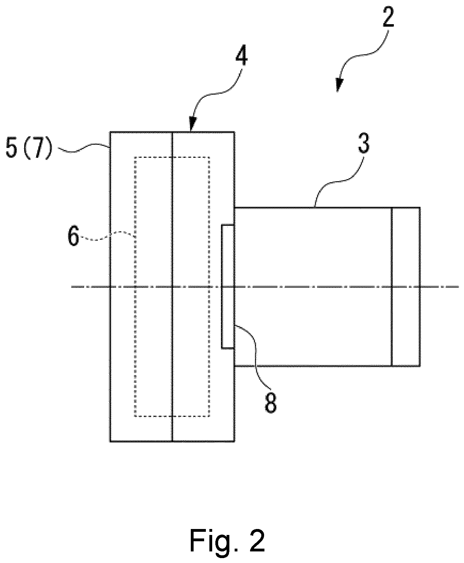

A description will now be first given of the electric actuator 2 with reference to Fig. 2. Fig. 2 schematically illustrates configuration of the electric actuator 2. As shown in Fig. 2, the electric actuator 2 includes an actuator-adapted electric motor 3 and a speed reducer 4 integrated with the actuator-adapted electric motor 3. The actuator-adapted electric motor 3 and the speed reducer 4 are arranged in the axial direction. The speed reducer 4 includes a case 5 and a reduction mechanism 6 housed in the case 5.

The reduction mechanism 6 decelerates the rotation input from the actuator-adapted electric motor 3 and outputs the decelerated rotation. The reduction mechanism 6 is constituted by, for example, a plurality of gears. The case 5 functions as an output unit 7 for the reduction mechanism 6. The electric actuator 2 is installed such that the rotational axis of the actuator-adapted electric motor 3 and the speed reducer 4 coincide with the corresponding one of the rotational axes J1 to J3.

For example, in the electric actuator 2 installed at the coupling portion between the swing bracket 105 and the boom 102, the actuator-adapted electric motor 3 is fixed to either one of the swing bracket 105 or the boom 102. The case 5 is fixed to the other of the swing bracket 105 or the boom 102. This configuration allows the boom 102 to rotationally drive relative to the swing bracket 105 around the first rotational axis J1.

For example, in the electric actuator 2 installed at the coupling portion between the boom 102 and the arm 103, the actuator-adapted electric motor 3 is fixed to either one of the boom 102 or the arm 103. The case 5 is fixed to the other of the boom 102 or the arm 103. This configuration allows the arm 103 to rotationally drive relative to the boom 102 around the second rotational axis J2.

For example, in the electric actuator 2 installed at the coupling portion between the arm 103 and the bucket 104, the actuator-adapted electric motor 3 is fixed to either one of the arm 103 or the bucket 104. The case 5 is fixed to the other of the arm 103 or the bucket 104. This configuration allows the bucket 104 to rotationally drive relative to the arm 103 around the third rotational axis J3.

Each electric actuator 2 is equipped with an impact detection sensor 8. The impact detection sensors 8 detect impact loads applied to the boom 102, the arm 103, and the bucket 104. The impact detection sensors 8 may be, for example, strain sensors, current sensors, acceleration sensors, or angular velocity sensors. A strain sensor would detect the impact loads applied to the boom 102, the arm 103, or the bucket 104 by, for example, detecting the strain generated in the case 5. If the strain value exceeds a predetermined threshold, it is determined that the boom 102, the arm 103, or the bucket 104 is subjected to excessive impact loads.

A current sensor detects a current value supplied to the actuator-adapted electric motor 3. If the current value exceeds a predetermined threshold, it is determined that the boom 102, the arm 103, or the bucket 104 is subjected to excessive impact loads. With an acceleration sensor or an angular velocity sensor, if the degree of speed reduction after driving the boom 102, the arm 103, or the bucket 104 falls below a predetermined threshold, it is determined that the boom 102, the arm 103, or the bucket 104 is subjected to excessive impact loads. The acceleration sensor or the angular velocity sensor can also be installed on the boom 102, the arm 103 or the bucket 104. In the following description, the above thresholds are collectively referred to as impact load thresholds.

The drive device 1 includes a damper 9 in addition to the electric actuator 2. The damper 9 is provided to be connected to the slewable upper structure 101b and the swing bracket 105. The damper 9 mitigates the impact loads applied to the swing bracket 105. In other words, the impact loads applied to the boom 102, the arm 103, or the bucket 104 are transmitted to the swing bracket 105. Therefore, the damper 9 which mitigates the impact loads applied to the swing bracket 105 resultantly mitigates the impact loads applied to the boom 102, the arm 103, or the bucket 104.

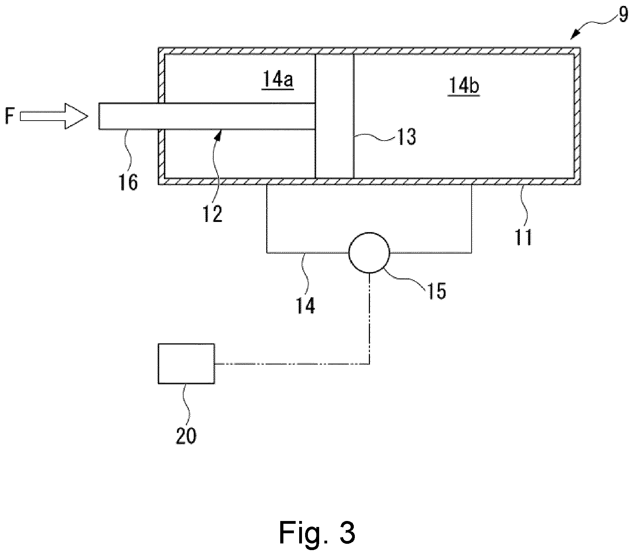

Fig. 3 schematically shows the configuration of the damper 9. As shown in Figs. 1 and 3, the damper 9 is, for example, an extensible cylinder damper. The damper 9 includes a cylinder 11 and a piston rod 12 that slides within the cylinder 11 along the axial direction of the cylinder 11. The interior of the cylinder 11 is partitioned into two hydraulic chambers 14a, 14b by a piston 13 of the piston rod 12. The cylinder 11 is filled with a hydraulic fluid. The two hydraulic chambers 14a, 14b are connected to a channel 14 that allows communication between these two hydraulic chambers 14a, 14b. The channel 14 is provided with an open/close switch 15. The open/close switch 15 allows or blocks the flow of the hydraulic fluid in the channel 14.

The open/close switch 15 is connected to the control unit 20 provided on the construction machine 100. The control unit 20 receives signals representing the values detected by the impact detection sensors 8. The control unit 20 has impact load thresholds that are set separately for the coupling portion between the swing bracket 105 and the boom 102 (hereinafter referred to as "BM coupling portion"), the coupling portion between the boom 102 and the arm 103 (hereinafter referred to as "AM coupling portion"), and the coupling portion between the arm 103 and the bucket 104 (hereinafter referred to as "BKT coupling portion"). The control unit 20 controls the opening and closing of the open/close switch 15 based on the signals input from the impact detection sensors 8 and the impact load thresholds.

In the damper 9 thus configured, the cylinder 11 is fixed to either one of the slewable upper structure 101b or the swing bracket 105. In the damper 9, the rod 16 of the piston rod 12 is fixed to the other of the slewable upper structure 101b or the swing bracket 105. When a predetermined amount of impact load is applied to the rod 16 (see the arrow F in Fig. 3), the piston 13 is pushed in, and the volumes of the two hydraulic chambers 14a, 14b are forced to change. This causes the flow of the hydraulic fluid moving between the two hydraulic chambers 14a, 14b, and this flow acts as resistance and mitigates the impact loads applied to the rod 16. At this time, the flow of the hydraulic fluid in the channel 14 is allowed by the open/close switch 15.

On the other hand, when the flow of the hydraulic fluid in the channel is blocked by the open/close switch 15, the movement of the piston rod 12 is inhibited. Therefore, the damper 9 cannot mitigate the impact loads applied to the rod 16. In other words, the damper 9 is configured to operate in an enabled mode, which enables the function of mitigating the impact loads applied to the swing bracket 105 (rod 16), and a disabled mode, which disables the function of mitigating the impact loads applied to the swing bracket 105 (rod 16).

### <Method of Controlling Drive Device>

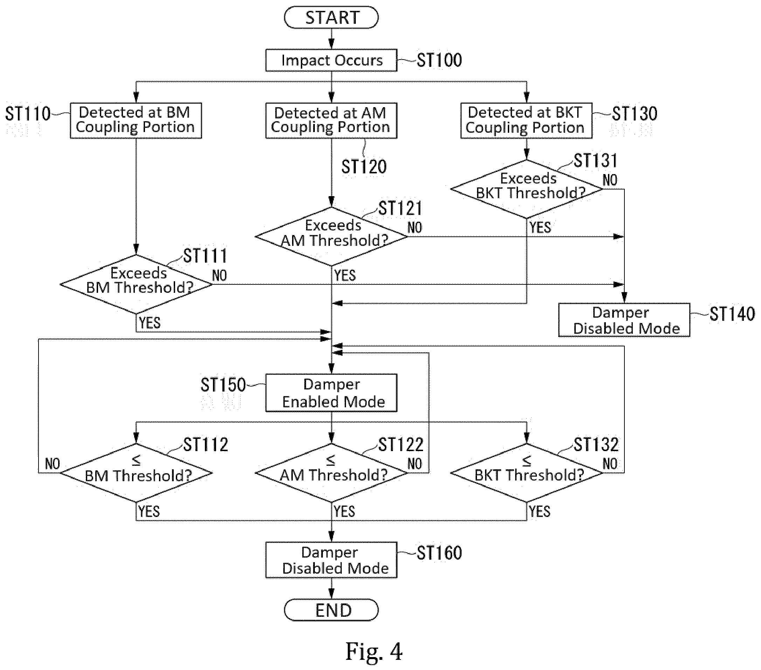

Next, a detailed description is given of a method of controlling the drive device 1. Fig. 4 is a flowchart showing a method of controlling the drive device 1. In the drive device 1, the damper 9 is in the disabled mode when the construction machine 100 is stopped or in normal operation. The term "normal operation" refers to operation in which the construction machine 100 is not subjected to excessive impact loads.

As shown in Fig. 4, when an impact load is applied to the construction machine 100 (step ST100), the impact load is detected by any of the impact detection sensors 8 installed in the BM, AM, and BKT coupling portions. If the impact load is detected by the impact detection sensor 8 in the BM coupling portion (step ST110), the control unit 20 determines whether or not the detected impact load exceeds the impact load threshold for the BM coupling portion (step ST111).

If the determination in step ST111 is "No", i.e., the impact load detected from the BM coupling portion is less than or equal to the impact load threshold, the damper 9 remains in the disabled mode (step ST140). If the determination in step ST111 is "Yes", i.e., the impact load detected from the BM coupling portion exceeds the impact load threshold, the control unit 20 switches the damper 9 to the enabled mode (step ST150). The impact load transmitted from the BM coupling portion to the swing bracket 105 is then mitigated by the damper 9. As a result, the load applied to the BM coupling portion is mitigated.

Subsequently, the control unit 20 determines whether or not the impact load detected from the BM coupling portion has been reduced to less than or equal to the impact load threshold (step ST112). If the determination in step ST112 is "No", i.e., the impact load detected from the BM coupling portion has not been reduced to less than or equal to the impact load threshold, the damper 9 remains in the enabled mode (step ST150). If the determination in step ST112 is "Yes", i.e., the impact load detected from the BM coupling portion has been reduced to less than or equal to the impact load threshold, the control unit 20 switches the damper 9 to the disabled mode (step ST160). The construction machine 100 returns to normal operation or stops.

If the impact load is detected by the impact detection sensor 8 in the AM coupling portion (step ST120), the control unit 20 determines whether or not the detected impact load exceeds the impact load threshold for the AM coupling portion (step ST121). If the determination in step ST121 is "No", i.e., the impact load detected from the AM coupling portion is less than or equal to the impact load threshold, the damper 9 remains in the disabled mode (step ST140).

If the determination in step ST121 is "Yes", i.e., the impact load detected from the AM coupling portion exceeds the impact load threshold, the control unit 20 switches the damper 9 to the enabled mode (step ST150). The impact load transmitted from the AM coupling portion to the swing bracket 105 is then mitigated by the damper 9. As a result, the load applied to the AM coupling portion is mitigated.

Subsequently, the control unit 20 determines whether or not the impact load detected from the AM coupling portion has been reduced to less than or equal to the impact load threshold (step ST122). If the determination in step ST122 is "No", i.e., the impact load detected from the AM coupling portion has not been reduced to less than or equal to the impact load threshold, the damper 9 remains in the enabled mode (step ST150). If the determination in step ST122 is "Yes", i.e., the impact load detected from the AM coupling portion has been reduced to less than or equal to the impact load threshold, the control unit 20 switches the damper 9 to the disabled mode (step ST160). The construction machine 100 returns to normal operation or stops.

If the impact load is detected by the impact detection sensor 8 in the BKT coupling portion (step ST130), the control unit 20 determines whether or not the detected impact load exceeds the impact load threshold for the BKT coupling portion (step ST131). If the determination in step ST131 is "No", i.e., the impact load detected from the BKT coupling portion is less than or equal to the impact load threshold, the damper 9 remains in the disabled mode (step ST140).

If the determination in step ST131 is "Yes", i.e., the impact load detected from the BKT coupling portion exceeds the impact load threshold, the control unit 20 switches the damper 9 to the enabled mode (step ST150). The impact load transmitted from the BKT coupling portion to the swing bracket 105 is then mitigated by the damper 9. As a result, the load applied to the BKT coupling portion is mitigated.

Subsequently, the control unit 20 determines whether or not the impact load detected from the BKT coupling portion has been reduced to less than or equal to the impact load threshold (step ST132). If the determination in step ST132 is "No", i.e., the impact load detected from the BKT coupling portion has not been reduced to less than or equal to the impact load threshold, the damper 9 remains in the enabled mode (step ST150). If the determination in step ST132 is "Yes", i.e., the impact load detected from the BKT coupling portion has been reduced to less than or equal to the impact load threshold, the control unit 20 switches the damper 9 to the disabled mode (step ST160). The construction machine 100 returns to normal operation or stops.

In the first embodiment described above, the drive device 1 includes the electric actuator 2 and the damper 9. Therefore, the impact loads applied to the coupling portions (the BM coupling portion, the AM coupling portion, and the BKT coupling portion) can be reduced by the damper 9. As a result, the impact loads applied to the electric actuators 2 provided in the coupling portions can be mitigated. Thus, damage to the electric actuators 2 can be prevented.

The damper 9 is configured to operate in the enabled mode, which enables the function of mitigating the impact loads applied to the swing bracket 105 (rod 16), and the disabled mode, which disables the function of mitigating the impact loads applied to the swing bracket 105 (rod 16). This prevents the damper 9 from acting constantly and thus imparting a load on the electric actuators 2. Therefore, reduction in the drive efficiency of the drive device 1 can be prevented.

In the method of controlling the drive device 1, the damper 9 is set to the enabled mode when the impact load applied to the coupling portions (BM coupling portion, AM coupling portion, and BKT coupling portion) exceeds a predetermined impact load threshold. The damper 9 is set to the disabled mode when the impact load applied to the coupling portions (BM coupling portion, AM coupling portion, and BKT coupling portion) is less than or equal to a predetermined impact load threshold. This method prevents the damper 9 from imparting a load on the electric actuators 2, while effectively reducing the impact load applied to the electric actuators 2 by the damper 9. Therefore, reduction in the drive efficiency of the drive device 1 can be prevented.

The first embodiment described above is based on the case where the damper 9 is connected to the slewable upper structure 101b and the swing bracket 105. However, the invention is not limited to such configuration. The damper 9 may be provided in any manner to be connected to two members (first and second members) provided rotatably. In this case, the drive device 1 should include, in addition to the damper 9, a first member, a second member rotatable relative to the first member so as to move closer to and away from the first member, and an electric actuator 2 that rotates the second member relative to the first member. It is also possible that the drive device 1 is not used in the construction machine 100.

When the drive device 1 is used in the construction machine 100, the first and second members are, for example, the boom 102, the arm 103, the bucket 104 or the like. If use of the drive device 1 is limited to the construction machine 100, it is also possible that the damper 9 cannot be switched between the enabled mode and the disabled mode. The damper 9 should act constantly. In this case, the damper 9 is provided to be connected to the slewable upper structure 101b and the swing bracket 105. This configuration prevents the damper 9 from imparting a load to the electric actuator 2 while acting constantly. Therefore, it is possible to prevent reduction in the drive efficiency of the drive device 1 while preventing damage to the electric actuator 2 caused by the impact loads.

The first embodiment described above is based on the case where the damper 9 is an extensible cylinder damper, for example. However, the invention is not limited to such configuration. The damper 9 may be configured in any manner to have the ability to mitigate the impact loads on the swing bracket 105 or the like and have the enabled mode, which enables the function of mitigating the impact loads, and the disabled mode, which disables the function of mitigating the impact loads. For example, the damper 9 may be a rotary damper instead of an extensible cylinder damper.

The first embodiment described above is based on the case where the damper 9 has a cylinder 11 filled with a hydraulic fluid. The resistance produced by the flow of the hydraulic fluid mitigates the impact loads applied to the rod 16. However, the invention is not limited to such configuration. Any configuration is possible as long as the cylinder 11 is filled with a fluid. Any configuration is possible as long as the resistance produced by the flow of the fluid mitigates the impact loads applied to the rod 16. For example, a gas such as the air can be used in place of the hydraulic fluid.

In addition, the damper 9 may be configured in the following manner.

### Second Embodiment

### <Drive Device>

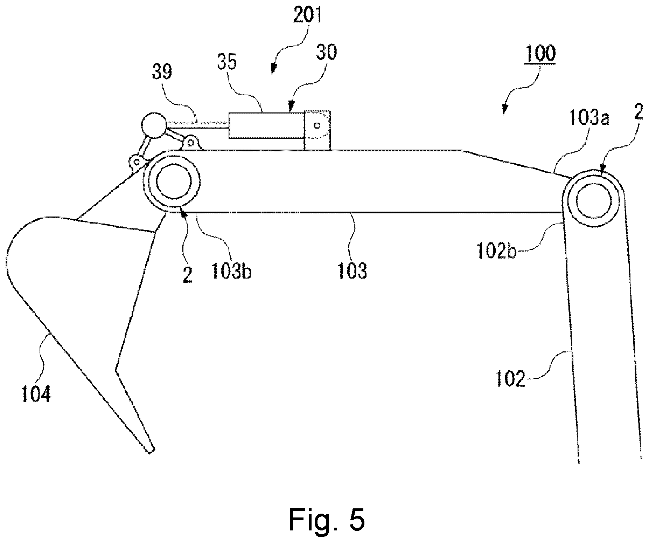

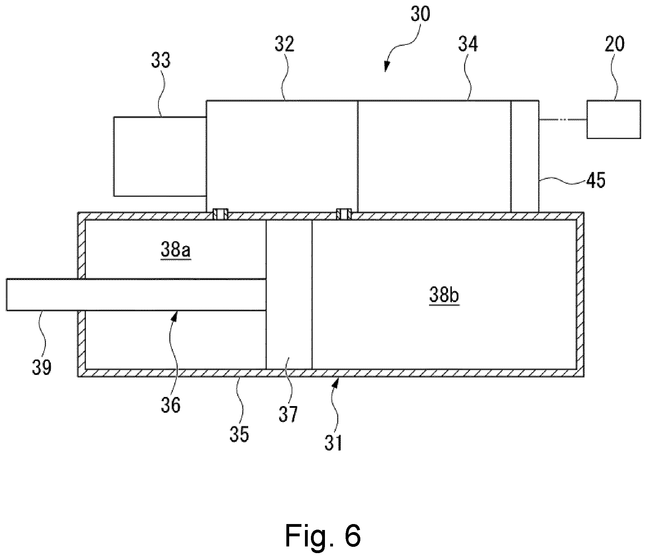

A second embodiment will now be described with reference to Figs. 5 and 6. Fig. 5 schematically illustrates configuration of a drive device 201 according to a second embodiment. In the following description, the same elements as in the first embodiment described above will be denoted by the same reference numerals and detailed descriptions thereof will be omitted (this also applies to the embodiments and variations described further below).

In the second embodiment, for example, the drive device 201 is used in the construction machine 100, as in the first embodiment described above. The drive device 201 includes the electric actuators 2, as in the first embodiment described above. The remaining features of the drive device 201 are the same as those of the drive device 1 according to the first embodiment described above (this also applies to the embodiments and variations described further below).

As shown in Fig. 5, the drive device 201 according to the second embodiment includes an electro-hydraulic actuator 30 in place of the damper 9 of the first embodiment. This is the difference between the first embodiment and the second embodiment. Fig. 5 shows the case where the electro-hydraulic actuator 30 is provided to be connected to the arm 103 and the bucket 104.

Fig. 6 schematically illustrates configuration of the electro-hydraulic actuator 30. As shown in Figs. 5 and 6, the electro-hydraulic actuator 30 includes a hydraulic cylinder 31, a hydraulic pump 32 for circulating a hydraulic fluid to the hydraulic cylinder 31, a tank 33 for storing the hydraulic fluid, and a hydraulic actuator-adapted electric motor 34 for driving the hydraulic pump 32. The hydraulic cylinder 31 includes a cylinder 35 and a piston rod 36 that slides within the cylinder 35 along the axial direction of the cylinder 35.

The interior of the cylinder 35 is partitioned into two hydraulic chambers 38a, 38b by a piston 37 of the piston rod 36. The hydraulic pump 32 supplies the hydraulic fluid stored in the tank 33 to the two hydraulic chambers 38a, 38b and drains the hydraulic fluid from the two hydraulic chambers 38a, 38b. Thus, the pressure of the hydraulic fluid acting on the piston 37 causes the piston rod 36 to slide.

The hydraulic actuator-adapted electric motor 34 is, for example, a brushless electric motor. The hydraulic actuator-adapted electric motor 34 has a driver 45 integrated thereon for selectively supplying current to the coil (not shown). The driver 45 is connected to, for example, the control unit 20. The control unit 20 controls the driving of the hydraulic actuator-adapted electric motor 34.

With such configuration, the cylinder 35 of the electro-hydraulic actuator 30 is fixed to the arm 103, for example. The rod 39 of the piston rod 36 of the electro-hydraulic actuator 30 is fixed to the bucket 104, for example. During normal operation of the construction machine 100, the electric actuator 2 is driven, and the electro-hydraulic actuator 30 is driven as well. At this time, these two actuators 2, 30 are driven and controlled in synchronization by the control unit 20. Thus, the driving forces of these two actuators 2, 30 are used to drive the bucket 104 relative to the arm 103, for example.

In contrast, if, for example, an excessive impact load is applied to the bucket 104, this impact load is transferred distributively to the electric actuator 2 and the electro-hydraulic actuator 30. Moreover, for example, when free driving of the hydraulic pump 32 is possible, the movement of the hydraulic fluid is allowed between the hydraulic chambers 38a and 38b via the hydraulic pump 32. This allows the electro-hydraulic actuator 30 to function as a damper for mitigating impact loads.

In the second embodiment described above, the drive device 201 includes the electro-hydraulic actuator 30 in place of the damper 9 of the first embodiment. This configuration produces the same effects as in the first embodiment described above. In the electro-hydraulic actuator 30, the movement of the hydraulic fluid is allowed and blocked between the hydraulic chambers 38a and 38b via the hydraulic pump 32. This allows the damper to be put into the enabled mode and the disabled mode, as in the first embodiment described above. In addition, the electro-hydraulic actuator 30 can assist in driving the electric actuator 2. Therefore, the drive efficiency of the drive device 201 can be increased.

### First Variation of Second Embodiment

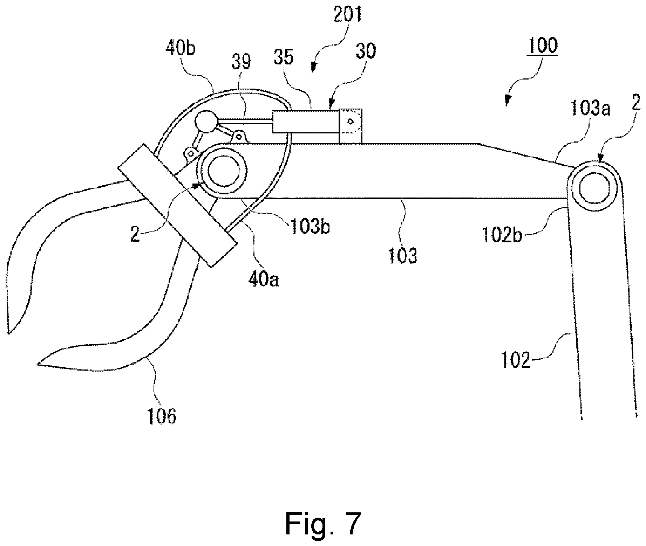

The following now describes a first variation of the second embodiment with reference to Fig. 7. Fig. 7 schematically illustrates configuration of the drive device 201 according to the first variation of the second embodiment. As shown in Fig. 7, for example, when a grapple 106 is used in place of the bucket 104 as an attachment for the construction machine 100, the grapple 106 and the cylinder 35 of the electro-hydraulic actuator 30 may be connected via tubes 40a and 40b. With this configuration, the hydraulic fluid in the cylinder 35 is used as the hydraulic power source for driving the grapple 106. The tubes 40a, 40b are tubes with high pressure resistance, such as high-pressure tubes or metal piping.

Therefore, according to the first variation of the second embodiment described above, even when the hydraulic fluid is used as a power source for the attachment (e.g., the grapple 106), the attachment can be driven without additional components. This allows for greater versatility of the equipment on which the drive device 201 is installed, such as the construction machine 100, and also prevents the increase in the number of parts.

### Second Variation of Second Embodiment

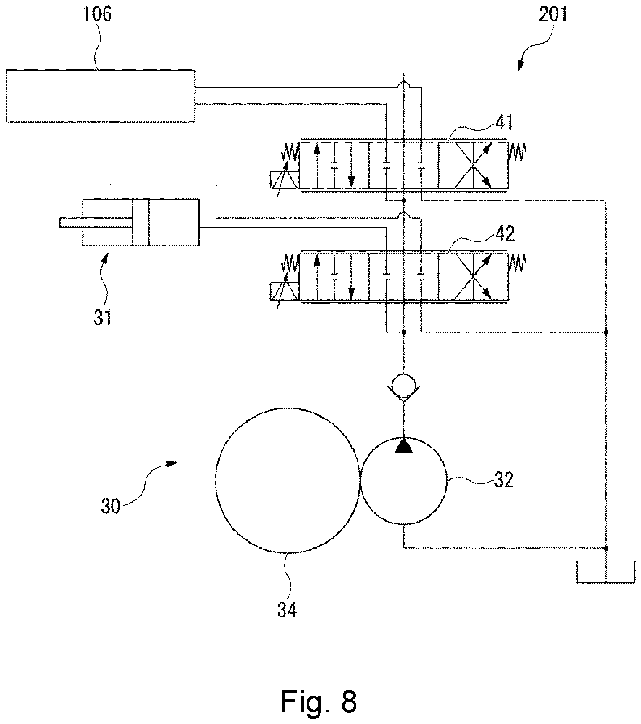

The following now describes a second variation of the second embodiment with reference to Fig. 8. Fig. 8 is a hydraulic circuit diagram of the drive device 201 according to the second variation of the second embodiment. As shown in Fig. 8, control valves 41, 42 may be provided in the electro-hydraulic actuator 30 included in the drive device 201. The control valves 41, 42 are provided between the hydraulic pump 32 and the attachment (grapple 106) or the hydraulic cylinder 31. The driving of the control valves 41, 42 is controlled by the control unit 20.

When the hydraulic fluid is used as the power source for the attachment (e.g., grapple 106) of the construction machine 100, the control valves 41, 42 are used as follows. The control valves 41, 42 adjust the flow rate of the hydraulic fluid supplied from the hydraulic pump 32 to the attachment (grapple 106) and the hydraulic cylinder 31.

Therefore, according to the second variation of the second embodiment described above, the attachment (grapple 106) and the hydraulic cylinder 31 can be driven efficiently by the drive device 201 having a simplified configuration.

### Third Variation of Second Embodiment

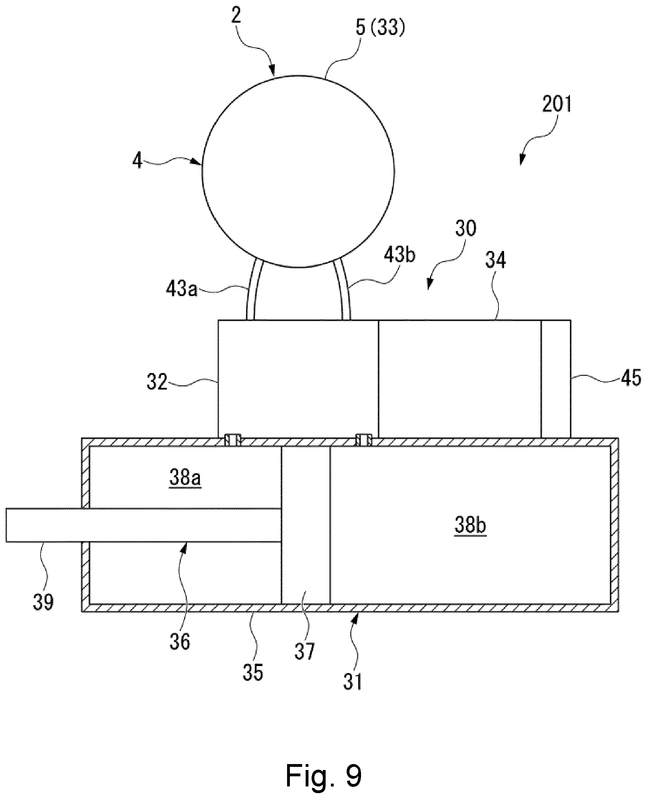

The following now describes a third variation of the second embodiment with reference to Fig. 9. Fig. 9 schematically illustrates configuration of the drive device 201 according to the third variation of the second embodiment. As shown in Fig. 9, the electro-hydraulic actuator 30 does not necessarily include the tank 33. In an alternative configuration. the case 5 of the electric actuator 2 may serve as the tank 33. Specifically, the case 5 of the speed reducer 4 is filled with the hydraulic fluid (lubricating fluid) for the purpose of suppressing the wear of the reduction mechanism 6. This hydraulic fluid is used to drive the hydraulic cylinder 31.

The case 5 is connected to the hydraulic pump 32 via the tubes 43a, 43b. The tubes 43a, 43b are tubes with high pressure resistance, such as high-pressure tubes or metal piping. The hydraulic pump 32 supplies the hydraulic fluid in the case 5 to the hydraulic cylinder 31 or discharges the hydraulic fluid from the hydraulic cylinder 31, thereby driving the hydraulic cylinder 31.

The speed reducer 4 having the case 5, or the tubes 43a, 43b are provided with a filtering portion (not shown) for filtering the hydraulic fluid in the case 5 that is sucked by the hydraulic pump 32. This prevents wear debris or the like produced in the reduction mechanism 6 from being sucked into the hydraulic pump 32. The filtering portion is, for example, a magnet or filter that attracts the wear debris.

In the third embodiment described above, the case 5 of the electric actuator 2 serves as the tank 33 for storing the hydraulic fluid. This reduces the number of parts in the electro-hydraulic actuator 30, allowing the entire drive device 201 to have a smaller size and a smaller weight. Therefore, the drive efficiency of the drive device 201 can be further increased.

The tubes 43a, 43b may be exposed to the outside air or may be housed inside the electric actuator 2 or the electro-hydraulic actuator 30. When the tubes 43a, 43b are exposed to the outside air, heat can be dissipated from the hydraulic fluid flowing through the tubes 43a, 43b. The hydraulic fluid cooled when flowing through the tubes 43a, 43b lubricates the speed reducer 4, the hydraulic pump 32, and the hydraulic cylinder 31. This allows the reduction gear 4, the hydraulic pump 32, the hydraulic cylinder 31 and the like to be efficiently cooled by the hydraulic fluid.

In addition, for example, the amount of iron debris in the hydraulic fluid flowing through the tubes 43a, 43b may be detected. With this configuration, if the amount of iron debris is greater than a predetermined value, it can be determined that abnormal wear has occurred in the reduction mechanism 6, the hydraulic pump 32, or the like. In other words, detecting the amount of iron powder in the hydraulic fluid flowing through the tubes 43a, 43b makes it possible to detect failures of the electric actuator 2 or the electro-hydraulic actuator 30.

### Fourth Variation of Second Embodiment

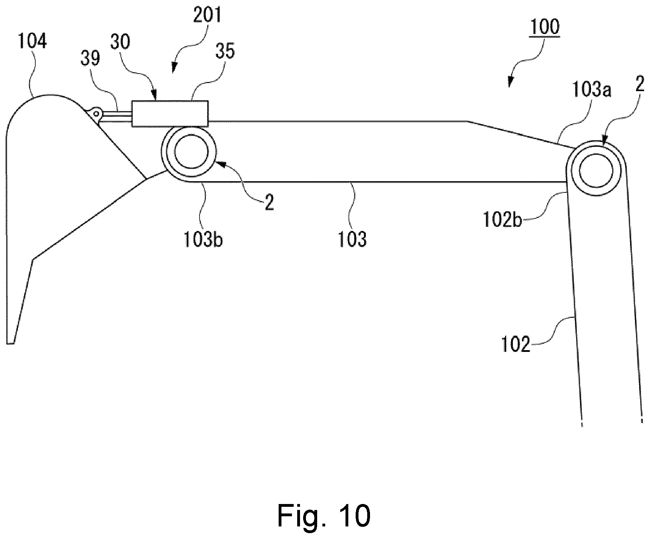

The following now describes a fourth variation of the second embodiment with reference to Fig. 10. Fig. 10 schematically illustrates configuration of the drive device 201 according to the fourth variation of the second embodiment. As shown in Fig. 10, the electric actuator 2 and the electro-hydraulic actuator 30 may be integrated together. In the second embodiment described above, the cylinder 35 of the electro-hydraulic actuator 30 is fixed to the arm 103. In the fourth variation, for example, the cylinder 35 is fixed to the case 5 of the electric actuator 2.

In this configuration, the electro-hydraulic actuator 30 rotates and moves as the electric actuator 2 drives. The driving force of the electric actuator 2 is transmitted to the bucket 104 via the electro-hydraulic actuator 30, and the bucket 104 is driven by this driving force. In this case, the electric actuator 2 and the electro-hydraulic actuator 30 may separately drive. Moreover, the electric actuator 2 and the electro-hydraulic actuator 30 may synchronously drive. The sum of the amount of driving of the electric actuator 2 and the amount of driving of the electro-hydraulic actuator 30 (the amount of extension and contraction of the rod 39) is the amount of movement of the bucket 104 relative to the arm 103. In the fourth variation, the case 5 may serve as the tank 33, or the tank 33 may be installed in the electro-hydraulic actuator 30.

In the fourth variation, the electric actuator 2 and the electro-hydraulic actuator 30 are integrated together. Thus, for example, there is no need to provide a bracket or the like to fix the electro-hydraulic actuator 30 to the arm 103. Therefore, the number of parts in the drive device 201 can be reduced.

Since the sum of the amount of driving of the electric actuator 2 and the amount of driving of the electro-hydraulic actuator 30 (the amount of extension and contraction of the rod 39) is the amount of movement of the bucket 104 relative to the arm 103, the amounts of driving of the actuators 2, 30 can be reduced. This makes it possible to extend the product lives of the actuators 2, 30.

In the fourth variation, a description was given of the case where the cylinder 35 of the electro-hydraulic actuator 30 is fixed to the case 5 of the electric actuator 2. However, the invention is not limited to such configuration. It is also possible that the cylinder 35 is fixed to the bucket 104 and the rod 39 of the electro-hydraulic actuator 30 is fixed to the case 5.

In the second embodiment and the variations described above, a description was given of the case where, for example, the bucket 104 is driven relative to the arm 103. However, the invention is not limited to such configuration. The drive device 201 may be used to drive the arm 103 relative to the boom 102 or to drive the boom 102 relative to the swing bracket 105. For example, the electro-hydraulic actuator 30 may be provided to be connected to the boom 102 and the arm 103, or the electro-hydraulic actuator 30 may be provided to be connected to the swing bracket 105 and the boom 102. It is also possible to integrate the electric actuator 2 and the electro-hydraulic actuator 30 in each of the BM coupling portion and the AM coupling portion.

In the second embodiment and the variations described above, a description was given of the electro-hydraulic actuator 30 having the hydraulic fluid serving as a drive source. However, the invention is not limited to such configuration. Electric fluid actuators using various fluids as a drive source may be used. The hydraulic cylinder 31 and the hydraulic pump 32 may drive with any fluid stored in the tank. The fluid is not limited to a liquid but may be a gas.

In the first embodiment, the second embodiment, and the variations described above, a description was given of the case where the electric actuator 2 includes the actuator-adapted electric motor 3 and the speed reducer 4 integrated with the actuator-adapted electric motor 3. However, the invention is not limited to such configuration. The electric actuator 2 may be configured in any manner to drive the two members (first and second members) provided rotatably. For example, the electric actuator 2 may be a linear actuator.

### Third Embodiment

### <Drive Device>

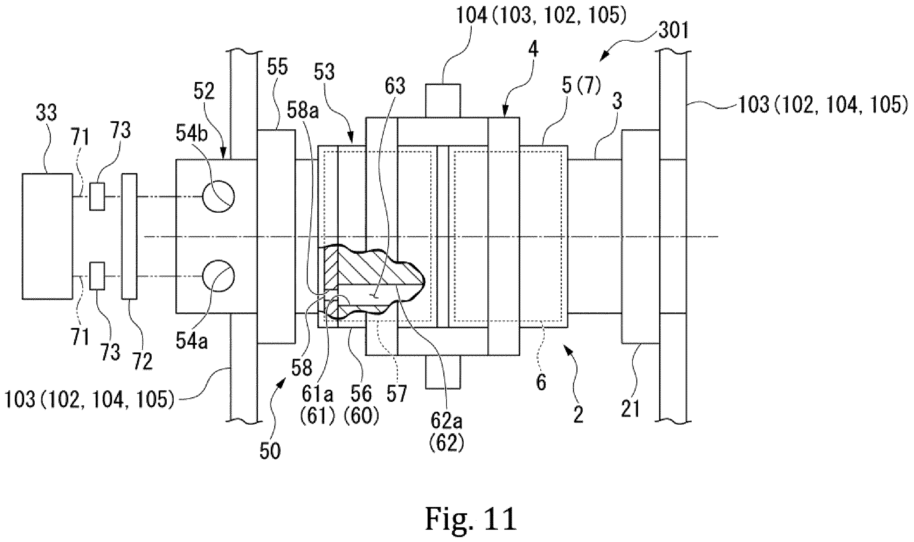

A third embodiment will now be described with reference to Fig. 11. Fig. 11 schematically illustrates configuration of a drive device 301 according to the third embodiment. As shown in Fig. 11, the drive device 301 according to the third embodiment includes a hydraulic actuator 50 (an example of the fluid rotator recited in the claims) in place of the damper 9 of the first embodiment. In this respect, the third embodiment is different from the first and second embodiments.

The external appearance of the electric actuator 2 according to the third embodiment differs from that of the electric actuator 2 according to the first embodiment shown in Fig. 2, but the basic configuration is the same. Specifically, the electric actuator 2 according to the third embodiment includes the actuator-adapted electric motor 3 and the speed reducer 4 integrated with the actuator-adapted electric motor 3.

The actuator-adapted electric motor 3 includes an outer flange portion 21. The outer flange portion 21 is, for example, a fixing portion (an example of the electric rotator fixing portion recited in the claims) for fixing the electric actuator 2 to the boom 102, the arm 103, the bucket 104, or the swing bracket 105 at the BM coupling portion, the AM coupling portion, or the BKT coupling portion. The electric actuator 2 in the third embodiment is an example of the electric rotator recited in the claims. The output unit 7 of the electric actuator 2 in the third embodiment is an example of the electric rotator output unit recited in the claims.

The hydraulic actuator 50 includes a suction/discharge unit 52 for sucking the hydraulic fluid from the tank 33 or discharging the hydraulic fluid to the tank 33, and a drive unit 53 that is rotated by the hydraulic fluid sucked in through the suction/discharge unit 52 as a power source. The hydraulic actuator 50 is located coaxially with the electric actuator 2. The suction/discharge unit 52 and the drive unit 53 are arranged in the axial direction. The hydraulic actuator 50 is disposed such that the drive unit 53 and the output unit 7 (case 5) of the electric actuator 2 are opposed to each other in the axial direction.

The suction/discharge unit 52 has two suction/discharge ports 54a, 54b. The two suction/discharge ports 54a, 54b are connected to the tank 33 via tank channels 71. A relief valve 72 and control valves 73 are provided on the middle of the tank channels 71. The hydraulic fluid is sucked into or discharged from the drive unit 53 via the suction/discharge ports 54a, 54b. The relief valve 72 restricts the pressure of the hydraulic fluid sucked into the suction/discharge unit 52 from the tank 33. The control valves 73 control the flow of the hydraulic fluid into the tank channels 71.

The suction/discharge unit 52 has an outer flange portion 55. The outer flange portion 55 is, for example, a fixing portion (an example of the fluid rotator fixing portion recited in the claims) for fixing the hydraulic actuator 50 to the boom 102, the arm 103, the bucket 104, or the swing bracket 105 at the BM coupling portion, the AM coupling portion, or the BKT coupling portion.

The drive unit 53 includes a case 56, and a rotor portion 57 and a valve plate 58 housed in the case 56. The rotor portion 57 includes an internal gear 61 and an external gear 62 located radially inside the internal gear 61. The internal gear 61 is shaped annularly. The outer circumference of the internal gear 61 is fixed to the case 56. Internal teeth 61a are provided on the inner circumference of the internal gear 61.

The outer circumference of the external gear 62 has external teeth 62a that mesh with the internal teeth 61a. A plurality of volume chambers 63 are formed between the internal gear 61 and the external gear 62. Supplying the hydraulic fluid to these volume chambers 63 causes planetary motion of the external gear 62 radially inside the internal gear 61. The valve plate 58 is located on the suction/discharge unit 52 side of the case 56. The valve plate 58 is fixed to the case 56. The valve plate 58 has a port 58a that allows communication between the suction/discharge unit 52 and predetermined one of the volume chambers 63. The valve plate 58 supplies to the predetermined one of the volume chambers 63 the hydraulic fluid supplied from the suction/discharge unit 52 or drains the hydraulic fluid from the predetermined one of the volume chambers 63 via the port 58a.

With such configuration, when the hydraulic fluid is supplied from the suction/discharge unit 52 to the predetermined one of the volume chambers 63 via the valve plate 58, a pressure difference is generated between the volume chamber 63 to which the hydraulic fluid is supplied and the other volume chambers 63. This causes planetary motion of the external gear 62 radially inside the internal gear 61. At this time, the hydraulic fluid is discharged from a different volume chamber 63 than the volume chamber 63 to which the hydraulic fluid was supplied, to the suction/discharge unit 52 via the valve plate 58.

The planetary motion of the external gear 62 radially inside the internal gear 61 causes shift of the meshing position between the internal gear 61 and the external gear 62. The rotational force is thus generated in the internal gear 61. This causes rotation of the case 56 and the valve plate 58 that are integrated with the internal gear 61. In other words, the case 56 serves as the output unit (an example of the fluid rotator output unit recited in the claims) 60 of the hydraulic actuator 50 that rotates relative to the suction/discharge unit 52 (the outer flange portion 55). As the valve plate 58 is rotated, the hydraulic fluid is supplied to different volume chambers 63. In this way, the rotational force is continuously generated in the internal gear 61.

The case 5 (output unit 7) of the electric actuator 2 and the case 56 (output unit 60) of the hydraulic actuator 50 are connected via a member corresponding to the member to which the outer flange portions 21, 55 are fixed in the BM coupling portion, the AM coupling portion, and the BKT coupling portion. Specifically, for example, when the outer flange portions 21, 55 are fixed to the arm 103 at the BKT coupling portion, the cases 5, 56 are connected via the bucket 104 (see also Fig. 1). In such a case, the bucket 104 corresponds to the drive member recited in the claims.

### <Operation of Drive Device>

Next, a description is given of operation of the drive device 301. The following describes the case in which the drive device 301 is provided in the BKT coupling portion. In the drive device 301, the outer flange portions 21, 55 are fixed to the arm 103, and the cases 5, 56 are fixed to the bucket 104. The tank channel 71 is opened by the control valve 73.

When the electric actuator 2 is driven, the rotational force is transmitted to the bucket 104 by the case 5 (output unit 7). The rotational force of the case 5 is then transmitted to the case 56 (output unit 60) of the hydraulic actuator 50 via the bucket 104. The two cases 5, 56 and the bucket 104 rotate integrally.

In the hydraulic actuator 50, the rotation of the case 56 causes the valve plate 58 to rotate integrally with the case 56. The hydraulic fluid in the tank 33 is then supplied to the volume chambers 63 via the suction/discharge unit 52 and the valve plate 58. As the valve plate 58 continues to rotate, the rotational force is also generated in the electro-hydraulic actuator 30. This rotational force in the electro-hydraulic actuator 30 assists in driving the electric actuator 2. Thus, the driving forces of these two actuators 2, 50 are used to drive the bucket 104 relative to the arm 103, for example.

In contrast, if, for example, an excessive impact load is applied to the bucket 104, this impact load is transferred distributively to the electric actuator 2 and the hydraulic actuator 50. At this time, in the hydraulic actuator 50, the drive unit 53 is filled with the hydraulic fluid. Therefore, compression of the hydraulic fluid reduces the impact load transmitted to the hydraulic actuator 50. In other words, the hydraulic actuator 50 can function as a damper for reducing the impact load.

### <Method of Controlling Drive Device>

In addition to the case where the drive device 301 is driven as described above, there are two other methods for controlling the drive device 301: a braking mode in which the hydraulic actuator 50 applies a braking force to the electric actuator 2; and a regenerative mode in which the electric actuator 2 provides regenerative energy. In the braking mode, the control valve 73 blocks the tank channel 71. This blocks the circulation (flow) of the hydraulic fluid between the hydraulic actuator 50 and the tank 33 and prevents the rotation of the case 56. Therefore, the hydraulic actuator 50 applies a braking force to the electric actuator 2.

In the regenerative mode, the tank channel 71 is opened by the control valve 73 in the same manner as described above for the operation of the drive device. This allows the cases 5, 56 to rotate freely. As a result, regenerative energy can be obtained by the actuator-adapted electric motor 3 of the electric actuator 2.

In this way, the third embodiment described above produces the same effects as the second embodiment described previously. In addition, the electric actuator 2 and the hydraulic actuator 50 are located coaxially. The output unit 7 (case 5) of the electric actuator 2 and the output unit 60 (case 56) of the hydraulic actuator 50 are opposed to each other. These output units 7, 60 are connected via drive members (the bucket 104, the boom 102, the arm 103, and the swing bracket 105). Therefore, when an impact load is applied to the drive members (the bucket 104, the boom 102, the arm 103, and the swing bracket 105), the hydraulic actuator 50 can mitigate the impact load applied to the electric actuator 2, thereby preventing damage to the electric actuator 2. Since the hydraulic actuator 50 can assist the drive of the electric actuator 2, the drive efficiency of the drive device 301 can be improved.

The actuators 2, 50 include outer flange portions 21, 55 provided on the opposite side of the respective output units 7, 60 (cases 5, 56) in the axial direction. These outer flange portions 21 , 55 are fixed to the arm 103, for example. The output units 7, 60 (cases 5, 56) are fixed to the bucket 104, which rotates relative to the arm 103. This allows the drive member (the bucket 104 or the like) to be driven efficiently relative to the fixing member (the arm 103 or the like) to which the outer flange portions 21 , 55 are fixed.

The hydraulic actuator 50 includes the rotor portion 57 having the volume chambers 63, and a valve plate 58 for supplying the hydraulic fluid to and draining the hydraulic fluid from the volume chambers 63. The valve plate 58 rotates integrally with the output unit 60 (case 56). This ensures that the electric actuator 2 and the hydraulic actuator 50 can be synchronized. Therefore, control of driving of the hydraulic actuator 50 can be simplified, and the drive efficiency of the drive device 301 can be further increased.

The rotor portion 57 includes the internal gear 61 and the external gear 62 located radially inside the internal gear 61 and configured to perform planetary motion. The volume chambers 63 are formed between the internal gear 61 and the external gear 62. With this configuration, the hydraulic actuator 50 can obtain a large torque. Therefore, the drive efficiency of the drive device 301 can be further increased.

The method of controlling the drive device 301 has the regenerative mode in which the control valve 73 opens the tank channel 71. This allows the cases 5, 56 to rotate freely. As a result, regenerative energy can be obtained by the actuator-adapted electric motor 3 of the electric actuator 2. In the braking mode, the control valve 73 blocks the tank channel 71. This blocks the circulation (flow) of the hydraulic fluid between the hydraulic actuator 50 and the tank 33 and prevents the rotation of the case 56. Therefore, the hydraulic actuator 50 can apply a braking force to the electric actuator 2.

In the third embodiment described above, a description was given of the case where the hydraulic fluid is used as the drive source of the hydraulic actuator 50. However, the invention is not limited to such configuration. The invention is applicable to any devices that are both fluid devices using various liquids as the drive source and rotational devices that rotate coaxially with the electric actuator 2.

In the third embodiment described above, a description was given of the case where the electric actuator 2 includes the actuator-adapted electric motor 3 and the speed reducer 4 integrated with the actuator-adapted electric motor 3. However, the invention is not limited to such configuration. The electric actuator 2 can be any electric rotational device that rotates coaxially with the electric actuator 50. The electric actuator 2 does not necessarily include the speed reducer 4.

In the third embodiment described above, a description was given of the case where the case 56 of the hydraulic actuator 50 serves as the output unit 60. However, the invention is not limited to such configuration. An output shaft may be provided separately from the case 56. In this case, this output shaft and the valve plate 58 are configured to rotate integrally.

In the third embodiment described above, a description was given of the case where the actuator-adapted electric motor 3 of the electric actuator 2 includes the outer flange portion 21. A description was given of the case where the outer flange portion 21 is a fixing portion (an example of the electric rotator fixing portion recited in the claims) for fixing the electric actuator 2 to the boom 102, the arm 103, the bucket 104, or the swing bracket 105. A description was given of the case where the outer flange portion 55 is provided on the suction/discharge unit 52 of the hydraulic actuator 50. A description was given of the case where the outer flange portion 55 is a fixing portion (an example of the fluid rotator fixing portion recited in the claims) for fixing the hydraulic actuator 50 to the boom 102, the arm 103, the bucket 104, or the swing bracket 105. However, the invention is not limited to such configuration. Each of the fixing portions can be configured in any manner to fix the electric actuator 2 or the hydraulic actuator 50 to the boom 102, the arm 103, the bucket 104, or the swing bracket 105.

In the third embodiment described above, a description was given of the case where a closed circuit is formed between the tank 33 and the hydraulic actuator 50 via the tank channel 71. A description was given of the case where the relief valve 72 and the control valves 73 are provided on the middle of the tank channel 71. However, the invention is not limited to such configuration. The hydraulic actuator 50 can be driven in any manner to assist the driving of the electric actuator 2. For example, it is also possible that the control valves 73 are omitted and the switching between the regenerative mode and the braking mode is not performed. The relief valve 72 may be replaced with a control valve. This may mitigate a sudden pressure increase in the hydraulic actuator 50.

The hydraulic circuit of the hydraulic actuator 50 can be an open circuit. For the open circuit, a what is called a counterbalance valve is preferably provided on the middle of the channel to maintain the reverse driving force of the hydraulic actuator 50.

In the third embodiment described above, a description was given of the case where the hydraulic actuator 50 includes the volume chambers 63 defined by the internal gear 61 and the external gear 62 and includes the valve plate 58 that supplies and drains the hydraulic fluid to and from the volume chambers 63. A description was given of the case where the valve plate 58 is rotated from the outside (case 56) to obtain the driving force of the hydraulic actuator 50. However, the invention is not limited to such configuration. The hydraulic actuator 50 can be configured in any manner to provide the driving force by having the output unit rotated from the outside.

For example, the hydraulic actuator 50 may be what is called a swash plate hydraulic motor. This type of hydraulic motor includes a swash plate, a plurality of pistons that move along the swash plate around a rotational axis, a timing plate provided between the swash plate and the pistons, and a cylinder block having the pistons slidably inserted therein and configured to rotate around the rotational axis.

In this type of hydraulic motor, the timing plate functions similarly to the valve plate 58. The cylinder block functions similarly to the rotor portion 57. In other words, rotation of the timing plate causes the cylinder block to rotate and the pistons to reciprocate in the cylinder block. Then, the hydraulic fluid is supplied into or drained from the cylinder block, and a rotational force is generated in the cylinder block. Thus, the driving force of the hydraulic motor can be obtained.

In other respects, the invention is also not limited to the embodiments described above. Various modifications can be made to these embodiments without departing from the true scope and spirit of the present invention. For example, in the embodiments described above, a description was given of the case where the case 5 of the electric actuator 2 serves as the output unit 7. However, the invention is not limited to such configuration. An output shaft may be provided separately from the case 5.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

### LIST OF REFERENCE NUMBERS

1, 201, 301 drive device
2 electric actuator (electric rotator)
3 actuator-adapted electric motor
4 speed reducer
5 case
6 reduction mechanism
7 output unit (electric rotator output unit)
9 damper
11, 35 cylinder
16, 39 rod
20 control unit
21 outer flange portion (electric rotator fixing portion)
30 electro-hydraulic actuator (electric fluid actuator)
32 hydraulic pump (fluid pump)
33 tank
34 hydraulic actuator-adapted electric motor (fluid actuator-adapted electric motor)
43a, 43b tube
50 hydraulic actuator (fluid rotator)
55 outer flange portion (fluid rotator fixing portion)
57 rotor portion
58 valve plate
58a port
60 output unit (fluid rotator output unit)
61 internal gear
62 external gear
63 volume chamber
71 tank channel
101 vehicle body
102 boom (first member, second member, drive member, fixing member)
103 arm (first member, second member, drive member, fixing member)
104 bucket (first member, second member, drive member, fixing member)
105 swing bracket (first member, second member, drive member, fixing member)
106 grapple (first member, second member, drive member, fixing member)

## Claims

1. A drive device (1) comprising:
a first member (102, 103, 104, 105, 106);
a second member (102, 103, 104, 105, 106) rotatable relative to the first member so as to move closer to and away from the first member;
an electric actuator (2) configured to rotate the second member relative to the first member; and
a damper (9) connected to the first member and the second member,
wherein the damper (9) is configured to drive in an enabled mode and a disabled mode, the enabled mode enables a function of mitigating an impact load applied to either one of the first member and the second member, and the disabled mode disables the function of mitigating an impact load applied to either one of the first member and the second member.

2. A drive device (1) comprising:
a boom (102) rotatably coupled to a swing bracket (105) provided on a vehicle body (101);
an arm (103) rotatably coupled to the boom (102);
an attachment (104, 106) rotatably coupled to the arm (103);
an electric actuator (2) provided in at least one of a coupling portion between the swing bracket (105) and the boom (102), a coupling portion between the boom (102) and the arm (103), or a coupling portion between the arm (103) and the attachment (104, 106); and
a damper (9) connected to the vehicle body (101) and the swing bracket (105) and configured to mitigate an impact load applied to the swing bracket (105).

3. The drive device (201) of claim 1 or 2,
wherein the damper (9) includes an electric fluid actuator (30),
wherein the electric fluid actuator (30) includes:
a cylinder (31);
a fluid pump (32) configured to circulate a fluid to the cylinder (31); and
a fluid actuator-adapted electric motor (34) configured to drive the fluid pump (32).

4. The drive device (201) of claim 3,
wherein the electric actuator (2) includes:
an actuator-adapted electric motor (3); and
a speed reducer (4) integrated with the actuator-adapted electric motor (3),
wherein the speed reducer (4) includes:
a case (5); and
a reduction mechanism (6) housed in the case (5) and configured to decelerate rotation input from the actuator-adapted electric motor (3) and output the decelerated rotation, and
wherein the case (5) serves as a tank (33) for storing the fluid.

5. The drive device (201) of claim 4, wherein the electric fluid actuator (30) and the electric actuator (2) are integrated together.

6. The drive device (201) of claim 4,
wherein the fluid pump (32) and the case (5) are connected via a tube (43a, 43b) conveying the fluid, and
wherein the tube (43a, 43b) is exposed to an outside air.

7. A drive device (301) comprising:
a drive member (102, 103, 104, 105, 106); and
a fluid rotator (50) and an electric rotator (2) configured to drive the drive member (102, 103, 104, 105, 106),
wherein the fluid rotator (50) and the electric rotator (2) are located coaxially,
wherein a fluid rotator output unit (60) for outputting rotation of the fluid rotator (50) and an electric rotator output unit (7) for outputting rotation of the electric rotator (2) are opposed to each other, and
wherein the fluid rotator output unit (60) and the electric rotator output unit (7) are connected via the drive member (102, 103, 104, 105, 106).

8. The drive device (301) of claim 7,
wherein the fluid rotator (50) includes a fluid rotator fixing portion (55) located on an opposite side to the fluid rotator output unit (60) in an axial direction,
wherein the fluid rotator output unit (60) is rotated relative to the fluid rotator fixing portion (55),
wherein the electric rotator (2) includes an electric rotator fixing portion (21) located on an opposite side to the electric rotator output unit (7) in the axial direction,
wherein the electric rotator output unit (7) is rotated relative to the electric rotator fixing portion (21), and
wherein the fluid rotator fixing portion (55) and the electric rotator fixing portion (21) are fixed to a fixing member (102, 103, 104, 105, 106) other than the drive member (102, 103, 104, 105, 106).

9. The drive device (301) of claim 7 or 8,
wherein the fluid rotator (50) includes:
a rotor portion (57) having a volume chamber (63) with a liquid supplied to and drained from the volume chamber (63); and
a valve plate (58) having a port (58a) for supplying and draining the liquid into and from the volume chamber (63),
wherein the rotor portion (57) generates a rotational force with the liquid supplied to and drained from the volume chamber (63), and
wherein the valve plate (58) rotates integrally with the fluid rotator output unit (60).

10. The drive device (301) of claim 9,
wherein the rotor portion (57) includes:
an internal gear (61); and
an external gear (62) configured to perform planetary motion radially inside the internal gear (61), and
wherein the volume chamber (63) is formed between the internal gear (61) and the external gear (62).

11. A control method for controlling a drive device (1),
the drive device (1) including:
a first (102, 103, 104, 105, 106) member;
a second member (102, 103, 104, 105, 106) rotatable relative to the first member so as to move closer to and away from the first member;
an electric actuator (2) configured to rotate the second member relative to the first member; and
a damper (9) connected to the first member and the second member,
the damper (9) being configured to drive in an enabled mode and a disabled mode, the enabled mode enabling a function of mitigating an impact load applied to either one of the first member and the second member, the disabled mode disabling the function of mitigating an impact load applied to either one of the first member and the second member,
the control method comprising:
putting the damper (9) into the enabled mode when an impact load applied to either one of the first member and the second member exceeds a predetermined threshold; and
putting the damper (9) into the disabled mode when an impact load applied to either one of the first member and the second member is less than or equal to the predetermined threshold.

12. A control method for controlling a drive device (301),
the drive device (301) including:
a drive member (102, 103, 104, 105, 106);
a fluid rotator (50) and an electric rotator (2) configured to drive the drive member (102, 103, 104, 105, 106), and
a tank channel (71) configured to return a fluid for driving the fluid rotator (50) to a tank,
the fluid rotator (50) and the electric rotator (2) being located coaxially,
a fluid rotator output unit (60) for outputting rotation of the fluid rotator (50) and an electric rotator output unit (7) for outputting rotation of the electric rotator (2) being opposed to each other,
the fluid rotator output unit (60) and the electric rotator output unit (7) being connected via the drive member (102, 103, 104, 105, 106),
the control method comprising:
opening the tank channel (71) to obtain regenerative energy by the electric rotator (2); and
blocking the tank channel (71) to cause the fluid rotator (50) to function as a brake for braking rotation of the electric rotator (2).
